# EUROPÄISCHE PATENTANMELDUNG

(11) **EP 0 726 177 A1**
(43) Veröffentlichungstag der Anmeldung: **14.08.1996**
(21) Anmeldenummer: 96101740.7
(22) Anmeldetag: 07.02.1996
(51) Int. Cl.: B60G 7/00, B29C 44/04

(54) **Fahrwerkstrebe**

(30) Priorität: 08.02.1995 DE 19504086
(71) Anmelder: TRW Fahrwerksysteme GmbH & Co. KG, D-40547 Düsseldorf (DE)
(72) Erfinder: Dorr, Christoph, Dipl.Ing., D-40667 Meerbusch (DE); Schütt, Hans-Joachim, Dipl. Ing., D-50126 Bergheim (DE); Ehlert, Norbert, Dipl.Ing., D-47239 Duisburg (DE)
(74) Vertreter: Stenger, Watzke & Ring Patentanwälte

(57) **Zusammenfassung**

Die Erfindung betrifft eine Fahrwerkstrebe für Kraftfahrzeuge mit einem an mindestens einem Strebenende angeordneten Gehäuse (3) zur Aufnahme eines Gelenkes (4a). Um bei reduzierten Außenmaßen eine höhere Festigkeit bei gleichzeitig verringerten Herstellungskosten zu schaffen, ist die Strebe als nach dem Gasinnendruck-Spritzgieß-Verfahren hergestellter rohrförmiger Strebenkörper (1) aus Kunststoff mit an seinen Enden einstückig angeformten Gelenkgehäusen (3) ausgebildet.

## Beschreibung

Die Erfindung betrifft eine Fahrwerkstrebe für Kraftfahrzeuge mit einem an mindestens einem Strebenende angeordneten Gehäuse zur Aufnahme eines Gelenkes.

Derartige, insbesondere als Stabilisator-Koppelstangen verwendete Fahrwerkstreben sind bekannt. Sie werden neuerdings mit einem Strebenkörper mit verripptem, offenen Profil aus Kunststoff hergestellt. Diese Fahrwerkstreben haben gegenüber den bisherigen Stahlstreben die Vorteile eines geringeren Gewichtes, geringerer Herstellkosten und der Korrosionsbeständigkeit. Sie erfordern jedoch ein aufwendigeres Herstellungsverfahren mit komplizierten Spritzgießformen und haben darüber hinaus wegen ihrer größeren Querschnittsabmessungen einen größeren Raumbedarf.

Der Erfindung liegt die **Aufgabe** zugrunde, eine Fahrwerkstrebe der eingangs beschriebenen Art zu schaffen, die bei reduzierten Außenmaßen (Hüllraum) eine höhere Festigkeit bei gleichzeitig verringerten Herstellkosten aufweist.

Die **Lösung** dieser Aufgabenstellung durch die Erfindung ist dadurch gekennzeichnet, daß die Strebe als nach dem Gasinnendruck-Spritzgieß-Verfahren hergestellter rohrförmiger Körper aus Kunststoff mit an seinen Enden einstückig angeformten Gelenkgehäusen ausgebildet ist.

Mit diesem erfindungsgemäßen Vorschlag wird eine Fahrwerkstrebe geschaffen, deren rohrförmiger Strebenkörper nicht nur einen belastungsoptimierten Querschnitt aufweist und einen geringeren Hüllraum beansprucht als die bekannten Streben mit fachwerkartigem Aufbau, sondern eine Ausbildung der Gelenkköpfe am Strebenende auch mit zueinander beliebig verdrehten Gelenkachsen problemlos ermöglicht, da die rohrförmige Ausbildung des Strebenkörpers einen belastungsgerechten Übergang von Strebe zu Gelenkgehäuse ermöglicht und eine beliebige Bauteil-Entformungsrichtung bzw. Lage der Werkzeug-Trennebene erlaubt. Durch den rohrförmigen Strebenkörper kann sich darüber hinaus weder Schmutz noch Wasser im Strebenprofil sammeln, so daß sich durch den erfindungsgemäßen Vorschlag nicht nur Gewichtsvorteile, sondern auch Gebrauchsvorteile ergeben. Da die erfindungsgemäße Fahrwerkstrebe quasi verzugsfrei hergestellt wird, entstehen Gelenke mit eng tolerierten Eigenschaften bzw. kann ein Gelenkaufbau zum Einsatz kommen, der geringe Meßtoleranzen voraussetzt. Die sich bei diesem Verfahren einstellenden geringen inneren Spannungen und die Lunkerfreiheit bewirken zudem eine höhere Betriebsfestigkeit bzw. bessere Werkstoffausnutzung. Schließlich kann die Strebe mit einfacheren Spritzgießwerkzeugen und infolge der niedrigeren Arbeitsdrücke auf kleineren Spritzgießmaschinen hergestellt werden, wobei sich mit variablen Spritzgießwerkzeugen auch kleinere Serien kostengünstig herstellen lassen.

Gemäß einem weiteren Merkmal der Erfindung kann der rohrförmige Körper mit einem kreisringförmigen Querschnitt hergestellt werden, der eine weiterhin verbesserte Werkstoffausnutzung und ggf. Wandstärkenreduktion ermöglicht. Vorzugsweise weist der rohrförmige Körper einen über den Hauptteil seiner Länge gleichbleibenden Querschnitt auf.

Bei einer erfindungsgemäßen Alternativlösung wird die Strebe bei gleichbleibender Konstruktion mit gleichen Vorteilen im 2-Komponenten-Spritzgieß-Verfahren hergestellt, wobei der Hohlraum anstelle des Gases mit einem aufschäumenden expandierenden , vorzugsweise thermoplastischen Kunststoff - aus gleichem Basiswerkstoff wie der Strebenwerkstoff - ausgefüllt wird.

Auf der Zeichnung ist ein Ausführungsbeispiel einer erfindungsgemäßen Fahrwerkstrebe dargestellt, und zwar zeigt:
- Fig. 1: eine teilweise im Längsschnitt dargestellte Seitenansicht der Fahrwerkstrebe und
- Fig. 2: einen Querschnitt gemäß der Schnittlinie II - II in Fig. 1.

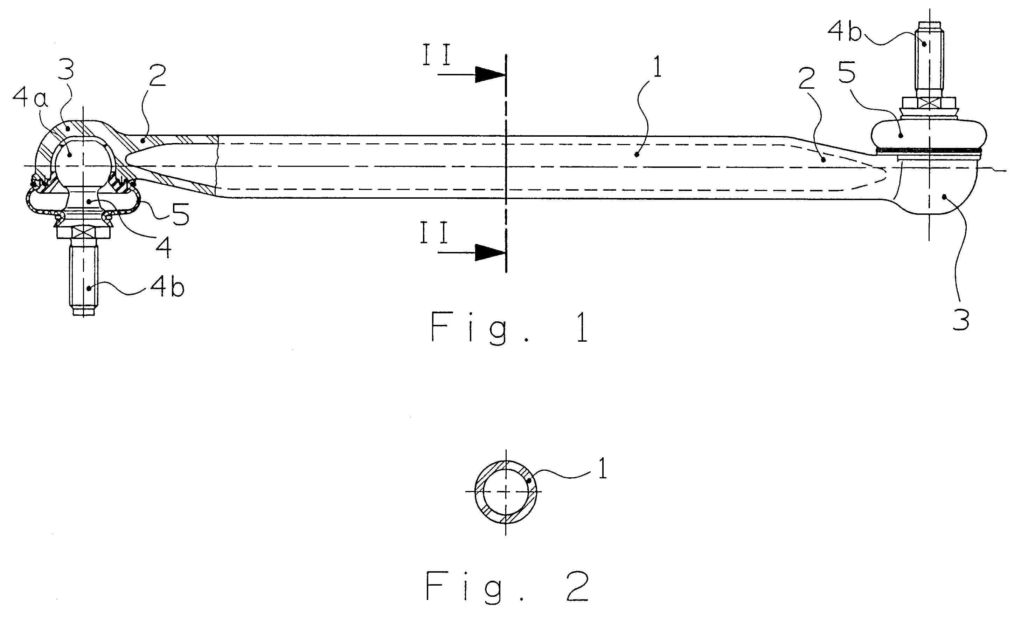

Die teilweise geschnittene Seitenansicht in Fig. 1 zeigt eine Fahrwerkstrebe mit einem rohrförmigen Strebenkörper 1, der gemäß Fig. 2 einen kreisringförmigen Querschnitt hat. Der in Fig. 2 dargestellte ringförmige Querschnitt ist über den Hauptteil der Länge konstant.

An den Enden des rohrförmigen Strebenkörpers 1 sind über Übergangsabschnitte 2 mit reduzierten Querschnittsabmessungen Gelenkgehäuse 3 einstückig angeformt, die jeweils zur Aufnahme eines Kugelzapfens 4 dienen.

Beim Ausführungsbeispiel umfaßt jeder Kugelzapfen 4 eine Gelenkkugel 4a und einen Gelenkzapfen 4b, der mittels eines Dichtungsbalges 5 gegenüber dem offenen Rand des Gelenkgehäuses 3 abgedichtet ist. Der Längsschnitt in Fig. 1 zeigt weiterhin, daß zwischen der Gelenkkugel 4a und dem Gelenkgehäuse 3 eine Lagerschale 6 aus Kunststoff eingesetzt ist.

Durch die Herstellung der Fahrwerkstrebe nach dem Gasinnendruck-Spritzgieß-Verfahren als rohrförmiger Körper ergeben sich nicht nur reduzierte Außenabmessungen mit glattflächiger, schmutzabweisender Oberfläche, sondern auch ein belastungsoptimierter Strebenquerschnitt, der eine Ausrichtung der Gelenkachsen, d.h. der Gelenkgehäuse 3 unter beliebigen Winkeln ermöglicht, weil der rohrförmige Strebenkörper 1 problemlos einen belastungsgerechten Übergang vom Strebenquerschnittsprofil (Fig. 2) zu den Gelenkköpfen 3 ermöglicht und eine beliebige Bauteil-Entformungsrichtung, d.h. Lage der Trennebene des Spritzgießwerkzeuges erlaubt.

### Bezugszeichenliste

- 1: Strebenkörper
- 2: Übergangsabschnitt
- 3: Gelenkgehäuse
- 4: Kugelzapfen
- 4a: Gelenkkugel
- 4b: Gelenkzapfen
- 5: Dichtungsbalg
- 6: Lagerschale

## Patentansprüche

1. Fahrwerkstrebe für Kraftfahrzeuge mit einem an mindestens einem Strebenende angeordneten Gehäuse zur Aufnahme eines Gelenkes,
**dadurch gekennzeichnet,**
daß die Strebe als nach dem Gasinnendruck-Spritzgieß-Verfahren hergestellter rohrförmiger Körper (1) aus Kunststoff mit an seinen Enden einstückig angeformten Gelenkgehäusen (3) ausgebildet ist.

2. Fahrwerkstrebe nach Anspruch 1, dadurch gekennzeichnet, daß der rohrförmige Körper (1) mit einem kreisringförmigen Querschnitt hergestellt ist.

3. Fahrwerkstrebe nach Anspruch 1 oder 2, dadurch gekennzeichnet, daß der rohrförmige Körper einen über den Hauptteil seiner Länge gleichbleibenden Querschnitt aufweist.

4. Fahrwerkstrebe nach mindestens einem der Ansprüche 1 bis 3, dadurch gekennzeichnet, daß der rohrförmige Körper durch in den Außenabmessungen reduzierte Übergangsabschnitte (2) einstückig mit den Gelenkgehäusen (3) verbunden ist.

5. Fahrwerkstrebe nach mindestens einem der Ansprüche 1 bis 4, dadurch gekennzeichnet, daß anstelle des Gases beim Spritzgießen ein aufschäumender expandierender , vorzugsweise thermoplastischer Kunststoff - mit gleichem Basiswerkstoff wie der Strebenwerkstoff - verwendet wird.
